# EUROPEAN PATENT SPECIFICATION

(11) **EP 3 329 781 B1**
(45) Date of publication and mention of the grant of the patent: **12.02.2020**
(21) Application number: 17205006.4
(22) Date of filing: 01.12.2017
(51) Int. Cl.: A21C 11/00, A21D 8/02, A21D 13/41

(54) **APPARATUS AND METHOD FOR MAKING PIZZA**
VERFAHREN UND VORRICHTUNG ZUM HERSTELLEN VON PIZZA
APPAREIL ET PROCÉDÉ POUR LA FABRICATION DE PIZZA

(30) Priority: 01.12.2016 IT 201600122327
(43) Date of publication of application: 06.06.2018
(73) Proprietor: Food Processing Equipment S.r.l., 43126 Parma (IT)
(72) Inventor: RUBINI, Ilvo, 43126 PARMA (IT)
(74) Representative: Dallaglio, Fabrizio

(56) References cited:
- EP-A1- 1 219 174
- US-A1- 2002 176 921
- US-A1- 2003 099 749
- US-A1- 2015 335 035
- US-B1- 6 626 091

## Description

### SCOPE OF THE INVENTION

The present invention relates to the field of the machines for the preparation of the industrial pizza and more precisely for forming the pizza base, particularly suitable for making pizzas with gluten-free flours.

### PRIOR ART

Prior art machines for making the pizza base at an industrial level are known, which allow making pizzas more or less similar to those made manually by the pizza maker. in order to make pizzas more similar to the artisanal ones, one does not use smooth pasta discs that are subsequently stuffed, but generally creates the characteristic outer edge typical of hand-made pizza. Specifically, some types of industrial machines for pizza with gluten start from a ball of dough and using pads, they crush said ball up to imprint the circular shape with a side edge, characteristic of the pizza and similar to hand-made pizza.

The dough, typically made with traditional gluten flours, is crushed by a circular pad that is able to generate the outer edge of the pizza disc. This is made possible by the fact that the traditional dough has a consistency such as to allow a disc with an edge to be made with a single mold.

Another example of machines for making pizza is described in US patent 6,626,091. In the solution described in this document, discs are used, arranged in a fixed angular position with respect to a main axis of the machine, which act on a pizza dough placed on a rotating plate.

A further solution is described in US 2003/0099749 which relates to a machine for making pizza comprising two fixed punches which act on the dough to spread it.

Also these machines are however not suitable for making pizzas with dough based on gluten-free flours. In fact, the making of pizzas with flours for celiacs and therefore gluten-free, is more complex, since the consistency of the dough is very different and above all is particularly sticky. In this case, on an industrial level, there are machines that create a blank or circular disc from the dough ball, but without the edge and said edge is always hand made by the staff on the line. In fact, the dough tends to stick to the pad and does not allow being formed like traditional doughs.

### DESCRIPTION AND ADVANTAGES OF THE INVENTION

One object of the present invention is to provide an improved apparatus for making pizza starting from dough blanks with a simple, rational and rather cost-effective solution.

A further object of the present invention is to provide an apparatus for making a pizza disc wherein the adhesion phenomenon when spreading the dough is minimized.

A further object of the present invention is to provide an apparatus for making a pizza disc wherein an outer edge similar to that present in hand-made pizza is defined.

It is also an object of the present invention to provide an apparatus for making a pizza disc suitable for industrial production.

These and other objects are achieved by the features of the invention as described in the independent claims. The dependent claims describe preferred and/or particularly advantageous aspects of the invention.

In particular, an embodiment of the present invention provides an apparatus which, due to suitable forming elements, is able to make the characteristic shape of the pizza disc, even when very sticky and very consistent doughs are used, such as those for celiacs obtained with gluten-free flours.

In addition, during the forming step, it is provided to use dispensing means of detaching substances suitable for preventing the adhesion between said forming elements and the dough. An example of a detaching substance is flour.

With this solution it is possible to automate the creation of a pizza base with edge even with difficult doughs, such as those for celiacs.

Another aspect of the invention is to provide an apparatus which, by means of the combined movement of rotation and widening of forming elements, allows crushing the dough blank uniformly by means of a minimum pressure with respect to that which would be necessary using a normal pad for traditional doughs.

In addition, this movement capacity makes the apparatus particularly suitable for industrial use since the forming elements can act on a row of dough blanks which advance below them on a conveyor belt.

Said objects and advantages are all achieved by the apparatus for making a pizza disc starting from dough blanks, which is the object of the present invention and which is characterized by the appended claims.

### BRIEF DESCRIPTION OF THE FIGURES

This and other features will become more apparent from the following description of some embodiments, illustrated purely by way of example in the accompanying drawings.
- Figure 1: shows an axonometric view of the apparatus for making a pizza disc starting from dough blanks.
- Figures 2, 2A, 2B show an elevation and sectional view (according to two operating steps fully closed and fully open) the pizza forming apparatus and related lifting and rotation means.

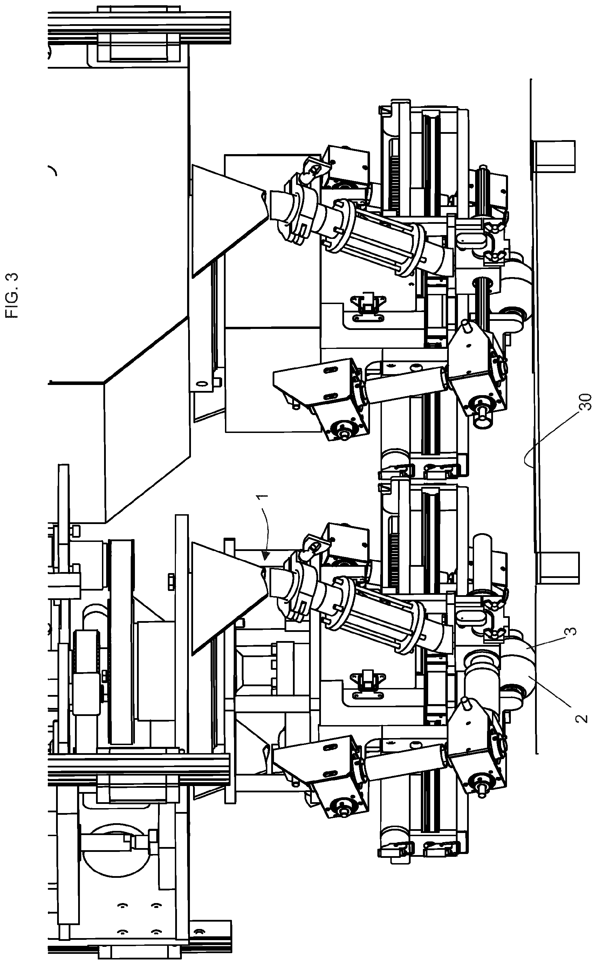

- Figure 3: shows an axonometric view of a detail of the forming elements and of the dispensers with respective moving towards/away means.

### DESCRIPTION OF THE INVENTION

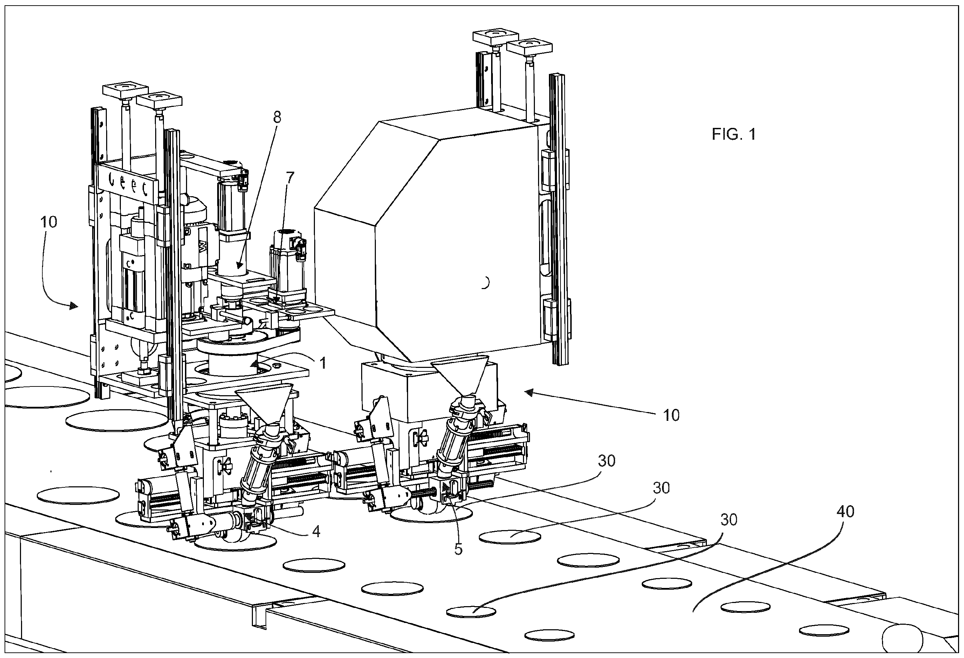

With particular reference to figure 1, an apparatus 10 for making a pizza disc starting from dough blanks 30 is shown. Said apparatus 10 is advantageously installable on a conveyor belt 40 on which the dough blanks 30 arrive. In the example described in the figure, there are two facing apparatuses 10, each of which acts on a respective row of blanks 30.

The first object of the invention is a method for making the pizza base having the shape of a disc and having a thicker outer edge particularly indicated when doughs for celiac are used.

Said method provides for exerting a pressure on the dough blank 30 by rotation and progressive enlargement of forming elements on which detaching substances are simultaneously released.

Said dough blank 30, which arrives at apparatus 10, must be previously worked.

In fact, the pizza dough is initially presented in the form of a ball. Said ball is previously crushed by means of a pad which makes a dough blank 30 having a diameter of about 100/120mm and a height of about 20mm. The pad is shaped so as to make a dough blank 30 having a lower central portion with respect to the edge.

The blank 30 accordingly shaped is positioned below the apparatus 10.

The apparatus 10 for implementing the method object of the present invention comprises a punch 1 having at least one pair of opposing forming elements 2 and 3. During the operating step which follows the preliminary crushing step by means of a pad, not shown in the figure, the forming elements 2 and 3 are located adjacent to each other and suitably for coming into contact with the dough blank 30.

In a preferred embodiment, each forming element 2 and 3 has a shape which comprises a spherical portion 21 and 31, and a face 22 and 32 having a substantially flat development, opposite thereto. It should be noted that in the context of the present invention, the flat face may also be understood as a flat edge of face 22 and 32, provided it is of sufficient thickness, so that the respective flat edges can abut one against the other.

More generally, the faces 22 and 32 are configured in a suitable manner so that the forming elements 2 and 3 can be brought into position adjacent to one another. Therefore, the planar development to which reference is made must be understood as an absence of protruding/depressing elements that may prevent the approach of the two forming elements 2 and 3. However, the presence of modest irregularities in the surface of the face 22 or 32 does not affect this movement capacity of the forming elements 2 and 3 and therefore may fall within the definition of the present invention.

The flat face 22 of the forming element 2 opposes the corresponding flat face 32 of the forming element 3. The spherical radius of the forming element 2 and 3 has the purpose of giving the dough the rounded shape of the edge of the pizza.

According to a further embodiment, the forming elements 2 and 3 may, as an alternative to the spherical portion 21 and 31, comprise a cylindrical portion. In this case, the edge will have a substantially squared shape or, considering the elasticity of the dough, less rounded than in the previous case.

The operating step provides that the punch 1 is moved in a vertical direction bringing the forming elements 2 and 3 closer to the conveyor belt and making them come into contact initially with the central part of the dough blank 30.

Said forming elements 2 and 3 before coming into contact with the punch 30 are preferably in an adjacent configuration or with the corresponding flat faces adjacent. Then they are rotated according to a vertical axis Y with respect to the support surface of the punch 30 and at the same time moved away, preferably in a symmetrical manner from one another, in a direction X which is orthogonal to said rotation axis.

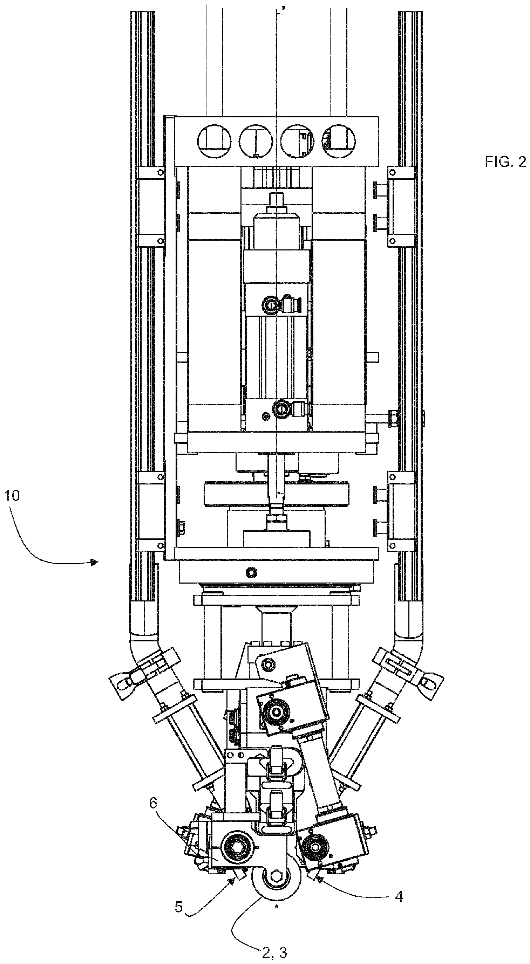

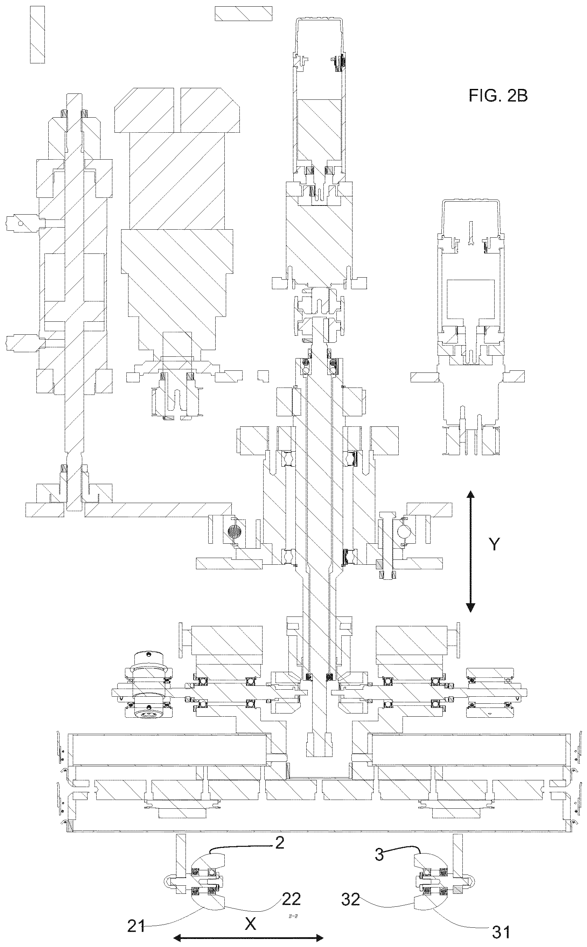

According to a feature of the invention, in order to facilitate the laying of the dough, each forming element 2 and 3 is free to rotate along an axis parallel to the moving away direction X, as can be seen from figure 2B, being preferably mounted on a bearing or bush.

According to a preferred embodiment, the rotation movement about the axis Y takes place by means of first moving means 7 which comprise preferably motor drives connected to transmission systems such as belts or chains.

Preferably, the translation movement of the forming elements 2 and 3 takes place by means of second moving means 8 which preferably include motor drives. In one embodiment, the moving means comprise a rack associated with a linear guide which allows translation of the forming elements 2 and 3. According to another embodiment, moving means comprise worm screws which in turn move corresponding nuts on which said forming elements 2 and 3 are mounted.

It is however understood that the moving means hereby described have an exemplary and non-limiting value.

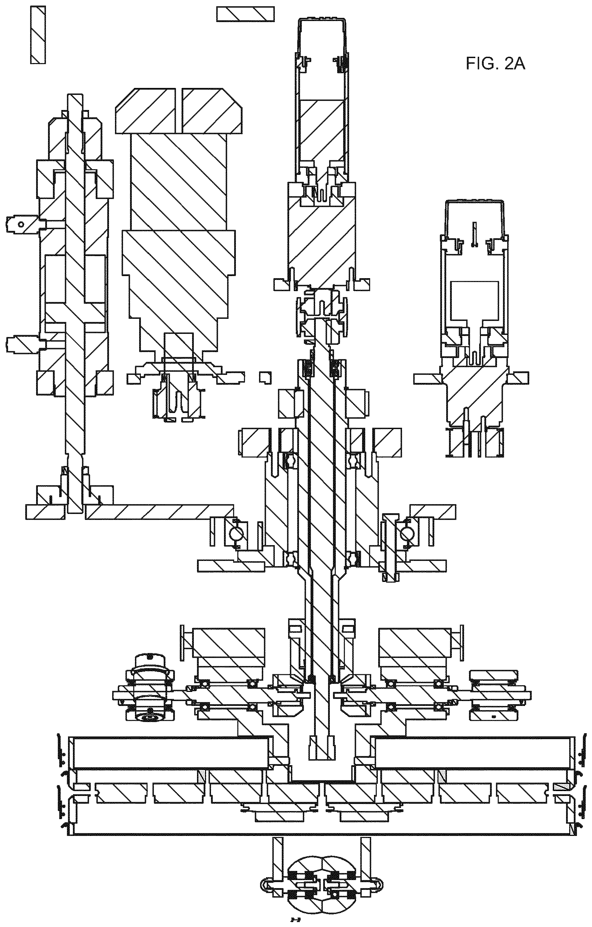

As can be seen in figure 2, a dispenser 4 and 5 is coupled to each forming element 2 and 3, configured to rotate and translate together with the corresponding forming element 2 and 3. To this end, in one embodiment, each forming element-dispenser pair is supported on a common support 6 connected to the punch 1.

Said dispenser 4 and 5 causes the proper quantity of detaching substance to drop in order to prevent adhesion between said forming elements and the dough. An example of a detaching substance is flour, possibly the same flour used for the dough.

Preferably, the detaching substance is delivered in front of each element, in front of it in the advance rolling direction. This advantageously allows preventing the dough from sticking and affecting the correct spreading of the pizza.

It will be appreciated that the detaching substance may be dispensed either directly on the forming elements, or on the blank portion immediately adjacent to the forming elements, in the direction of their advancement. In this way, the contact between the forming elements and the dough will take place only with the prior application of the detaching substance.

As said, in fact, a paste dough comprising gluten-free flour turns out to be particularly sticky and consistent.

Thus, in order to overcome the known drawbacks, during the rotation and widening of the forming elements 2 and 3, the above dispensers 4, 5 release these "detaching" substances on the surface portion of the forming element 2, 3 coming into contact with the dough blank 30 and/or on that portion of dough blank 30 intended to come into contact with the forming element 2, 3.

The operation of the pizza apparatus 10 provides for performing the forming according to the following steps:
the dough blank 30 is positioned centered under the punch 1; the forming elements 2 and 3 are in contact or adjacent to each other;
descending movement of the punch 1 to the working position, i.e. the forming elements 2 and 3 come into contact with the dough blank 30, preferably in its central part, compressing it;
rotation of the punch 1 and of the forming elements 2 and 3 which crush the dough according to a circumference;
release, preferably contemporaneous to the rotation movement, of detaching substances from the dispensers 4 and 5 on the forming elements 2 and 3; said substances are adapted to prevent the adhesion between said forming elements and the dough;
rotation and opening/moving away of the forming elements 2 and 3 which spread the dough according to circumferences getting larger and larger; simultaneous release of detaching substances from the dispensers 4 and 5 on the forming elements 2 and 3;
lifting the punch 1 from the working position with detachment of the forming elements 2 and 3 from the formed pizza disc.

The pizza disc thus obtained may require a second or third passage on successive forming devices 10 placed downstream of the previous one in order to obtain discs having larger diameters.

In particular, the maximum opening of the forming elements 2 and 3 of the punch 1 defines the inner diameter of the edge of the pizza.

By way of example, in the case in which pizzas with diameters of about 300mm have to be made, the forming step is preferably divided into three subsequent stations; in this case the forming elements 2 and 3 define a temporary edge which will be worked in the next station. In the second station, the forming elements 2 and 3 will have a larger opening of the forming elements 2 and 3 of the station which precedes and smaller than the opening of the forming elements 2 and 3 of the station that follows.

Generally, for pizzas with a diameter of 250 mm two forming stations are necessary, while for pizzas with a diameter of 200 a single station may be sufficient.

It is understood, however, that the foregoing has a value of non-limiting example, therefore, possible variants of detail that may be necessary for technical and/or functional reasons are considered to be falling within the same protection scope defined by the following claims.

For example, it should be considered that what is described is particularly advantageous for making pizza bases made with dough for celiac, particularly sticky and consistent, but it can also be extended to different or traditional doughs. In addition, the forming device is particularly suitable for forming when the starting base are dough blanks, but can also be used on already formed blanks on which to make the outer edge characteristic of the handmade pizzas.

## Claims

1. Apparatus (10) for making a pizza disc starting from dough blanks (30), comprising a punch (1), bearing at least one pair of opposing and adjacent forming elements (2, 3) suitable for being placed in rotation according to a vertical axis (Y) and to be moved away from each other in a direction (X) orthogonal to said rotation axis (Y); each forming element (2, 3) being free to rotate along an axis parallel to the axis (X), the apparatus (10) comprises at least one pair of dispensers (4, 5) mounted integral to each forming element (2, 3) which during rotation, progressively release detaching substances, wherein said dispensers (4, 5) are configured to release detaching substances on the surface portion of the corresponding forming element (2, 3) intended to come into contact with the dough blank (30) and/or on the portion of dough blank (30) intended to come into contact with the forming element (2, 3), **characterized in that** each forming element (2, 3) has a shape that includes a sphere portion (21, 31) or a cylindrical portion and a flat face (22, 32), wherein the flat face (22) of one forming element (2) is opposed to the corresponding flat face (32) of the other forming element (3).

2. Apparatus (10) according to the preceding claim, **characterized in that** the punch (1) is adapted to be moved according to the vertical axis (Y) bringing in operative conditions the forming elements (2, 3) in contact with the dough blank (30).

3. Apparatus (10) according to one of the preceding claims, wherein each dispenser (4, 5) is connected to said punch (1) in such a way as to rotate and translate together with the corresponding forming element (2, 3).

4. Apparatus (10) according to claim 3, wherein each forming element (2, 3) and each corresponding dispenser (4, 5) are supported on a common support (6) connected to the punch (1).

5. Apparatus (10) according to one of the preceding claims, wherein said dispensers (4, 5) are configured in such a way as to dispense the detaching substance in front of each forming element (2, 3), in the advance rolling direction.

6. Apparatus (10) according to one of the preceding claims, comprising a conveyor belt (40) suitable for transporting dough blanks (30) by sequentially placing them underneath said forming elements (2, 3).

7. Apparatus (10) according to one of the preceding claims, comprising first moving means (8) for rotating said forming elements (2, 3) about the vertical rotation axis (Y) and second moving means adapted to translate said forming elements along said one direction (X) orthogonal to said rotation axis (Y).

8. Method for making a pizza disc from a dough blank (30) with an apparatus according to one of the preceding claims, **characterized in that** it provides for:
a) exerting a pressure on the dough blank (30) by rotation and progressive enlargement of the forming elements (2, 3);
b) releasing detaching substances at least during said step a).

9. Method for making a pizza disc from a dough blank (30) according to claim 8, wherein said detaching substances comprise flour.

10. Method for making a pizza disc from a dough blank (30) according to claim 8 or 9, wherein said detaching substances are dispensed on the surface portion of the forming element (2, 3) intended to come into contact with the dough blank (30) and/or the portion of dough blank (30) intended to come into contact with the forming element (2, 3).

11. Method for making a pizza disc from a dough blank (30) according to one of claims 8 to 10, wherein the dough blank (30) is positioned centered under the punch (1) before exercising pressure on the dough blank (30).

12. Method for making a pizza disc from a dough blank (30) according to one of claims 8 to 11, further comprising lowering the punch (1) to a working position in which the forming elements (2, 3) come into contact with the dough blank (30).

13. Method for making a pizza disc from a dough blank (30) according to claim 12, wherein the forming elements (2, 3) are in contact or adjacent each other when the punch (1) is lowered to the working position.

## Patentansprüche

1. Vorrichtung (10) zum Herstellen einer Pizzascheibe aus Teiglingen (30) mit einem Stempel (1), der mindestens ein Paar gegenüberliegender und benachbarter Formelemente (2, 3) trägt, die entlang einer vertikalen Achse (Y) gedreht und in einer Richtung (X) senkrecht zu der Rotationsachse (Y) im Abstand voneinander bewegt werden können; wobei jedes Formelement (2, 3) ist frei drehbar entlang einer Achse parallel zur Achse (X); die Vorrichtung (10) umfasst mindestens ein Paar Verteilern (4, 5), die mit jedem Formgebungselement (2, 3) integral montiert sind, das während der Drehung allmählich lösbare Substanzen freisetzt, wobei die besagten Verteiler (4, 5) derart konfiguriert sind, dass sie auf dem Oberflächenteil des entsprechenden Formgebungselements (2, 3) lösbare Substanzen freisetzen, die dazu bestimmt sind, mit dem Teigling (30) und/oder dem Teil des Teiglings (30) in Kontakt zu kommen, der dazu bestimmt ist, mit dem Formelement (2, 3) in Kontakt zu kommen, **dadurch gekennzeichnet, dass** jedes Formelement (2, 3) eine Form aufweist, die einen Teil einer Kugel (21, 31) oder einen zylindrischen Teil und eine flache Fläche (22, 32) aufweist, wobei die ebene Fläche (22) eines Formungselements (2) der entsprechenden ebenen Fläche (32) des anderen Formungselements (3) gegenüberliegt.

2. Vorrichtung (10) nach dem vorhergehenden Anspruch, **dadurch gekennzeichnet, dass** der Stempel (1) entlang der vertikalen Achse (Y) bewegbar ist, wodurch die Formelemente (2, 3) in Kontakt mit dem Teigling (30) in einen Betriebszustand versetzt werden.

3. Vorrichtung (10) nach einem der vorhergehenden Ansprüche, wobei jeder Verteiler (4, 5) mit dem Stempel (1) derart verbunden ist, dass er sich zusammen mit dem entsprechenden Formelement (2, 3) dreht und verschiebt.

4. Vorrichtung (10) nach Anspruch 3, wobei jedes Formelement (2, 3) und jeder entsprechender Verteiler (4, 5) auf einem gemeinsamen Träger (6) gelagert sind, der mit dem Stempel (1) verbunden ist.

5. Vorrichtung (10) nach einem der vorhergehenden Ansprüche, wobei die besagten Verteiler (4, 5) derart konfiguriert sind, dass sie die ablösbare Substanz vor jedem Formelement (2, 3) in der vorgerückten Walzrichtung verteilen.

6. Vorrichtung (10) nach einem der vorhergehenden Ansprüche, umfassend ein Förderband (40), das Teiglinge (30) transportieren kann, indem sie nacheinander unter die besagten Formelemente (2, 3) gelegt werden.

7. Vorrichtung (10) nach einem der vorhergehenden Ansprüche, umfassend eine erste Verschiebeeinrichtung (8) zum Drehen der besagten Formelemente (2, 3) um die vertikale Drehachse (Y) und zweite Verschiebeeinrichtungen angepasst sind, um die besagten Formungselemente entlang der einen Richtung (X) orthogonal zu der Rotationsachse (Y) zu verschieben.

8. Verfahren zur Herstellung einer Pizzascheibe aus einem Teigling (30) mit einer Vorrichtung nach einem der vorhergehenden Ansprüche, **dadurch gekennzeichnet, dass** es folgendes aufweist:
a) Ausüben von einem Druck auf den Teigrohling (30) durch Drehen und allmähliches Vergrößern der Formungselemente (2, 3);
b) Freisetzen von ablösbaren Substanzen zumindest während des Schritts a).

9. Verfahren zum Herstellen einer Pizzascheibe aus einem Teigling (30) nach Anspruch 8, wobei die besagten ablösenden Substanzen Mehl umfassen.

10. Verfahren zum Herstellen einer Pizzascheibe aus einem Teigling (30) nach Anspruch 8 oder 9, wobei die besagten ablösenden Substanzen auf dem Oberflächenteil des Formungselements (2, 3) verteilt werden, die dazu vorgesehen sind, um mit dem Teigling (30) und/oder dem Teil des Teiglings (30) mit dem Formelement (2, 3) in Kontakt zu kommen.

11. Verfahren zum Herstellen einer Pizzascheibe aus einem Teigling (30) nach einem der Ansprüche 8 bis 10, wobei der Teigling (30) zentriert unter dem Stempel (1) positioniert wird, bevor er einen Druck auf den Teigling (30) übt.

12. Verfahren zum Herstellen einer Pizzascheibe aus einem Teigling (30) nach einem der Ansprüche 8 bis 11, ferner umfassend das Absenken des Stempels (1) in eine Arbeitsposition, in der sich die Formungselemente (2, 3) mit dem Teigling (30) in Kontakt kommen.

13. Verfahren zum Herstellen einer Pizzascheibe aus einem Teigling (30) nach Anspruch 12, wobei die Formungselemente (2, 3) in Kontakt oder benachbart zueinander sind, wenn der Stempel (1) in die Arbeitsposition abgesenkt wird.

## Revendications

1. Appareil (10) pour fabriquer un disque de pizza à partir d'un flan de pâte (30), comprenant un poinçon (1), portant au moins une paire d'éléments de formage opposés et adjacents (2, 3) pouvant être placés en rotation selon un axe verticale (Y) et pour être éloignés l'un de l'autre dans une direction (X) orthogonale audit axe de rotation (Y); chaque élément de formage (2, 3) étant libre de tourner le long d'un axe parallèle à l'axe (X), l'appareil (10) comprenant au moins une paire de distributeurs (4, 5) montés solidaires de chaque élément de formage (2, 3) qui, pendant la rotation, libèrent progressivement des substances détachables, dans lequel lesdits distributeurs (4, 5) sont configurés pour libérer des substances détachables sur la partie de surface de l'élément de formage correspondant (2, 3) destiné à entrer en contact avec le flan de pâte (30) et/ou sur la portion du flan de pâte (30) destinée à entrer en contact avec l'élément de formage (2, 3), **caractérisé en ce que** chaque élément de formage (2, 3) a une forme qui comprend une portion de sphère (21, 31) ou une portion cylindrique et une face plate (22, 32), dans laquelle la face plate (22) d'un élément de formage (2) est opposée à la face plate correspondante (32) de l'autre élément de formage (3).

2. Appareil (10) selon la revendication précédente, **caractérisé en ce que** le poinçon (1) est adapté pour être déplacé selon l'axe vertical (Y) mettant en condition opérationnelle les éléments de formage (2, 3) en contact avec le flan de pâte (30).

3. Appareil (10) selon l'une des revendications précédentes, dans lequel chaque distributeur (4, 5) est connecté audit poinçon (1) de manière à tourner et à translater ensemble avec l'élément de formage correspondant (2, 3).

4. Appareil (10) selon la revendication 3, dans lequel chaque élément de formage (2, 3) et chaque distributeur correspondant (4, 5) sont supportés sur un support commun (6) relié au poinçon (1).

5. Appareil (10) selon l'une des revendications précédentes, dans lequel lesdits distributeurs (4, 5) sont configurés de manière à distribuer la substance détachable devant chaque élément de formage (2, 3), dans le sens de laminage avancé.

6. Appareil (10) selon l'une des revendications précédentes, comprenant une bande transporteuse (40) adaptée pour transporter des flans de pâte (30) en les plaçant séquentiellement sous lesdits éléments de formage (2, 3).

7. Appareil (10) selon l'une des revendications précédentes, comprenant des premiers moyens de déplacement (8) pour faire tourner lesdits éléments de formage (2, 3) autour de l'axe de rotation vertical (Y) et des deuxièmes moyens de déplacement adaptés pour translater lesdits éléments de formage le long de ladite direction (X) orthogonale audit axe de rotation (Y) .

8. Procédé de fabrication d'un disque de pizza à partir d'un flan de pâte (30) avec un appareil selon l'une des revendications précédentes, **caractérisé en ce qu'**il prévoit:
a) exercer une pression sur le flan de pâte (30) par rotation et agrandissement progressif des éléments de formage (2, 3);
b) libérer des substances détachables au moins au cours de ladite étape a).

9. Procédé de fabrication d'un disque de pizza à partir d'un flan de pâte (30) selon la revendication 9, dans lequel lesdites substances de détachement comprennent de la farine.

10. Procédé de fabrication d'un disque de pizza à partir d'un flan de pâte (30) selon la revendication 8 ou 9, dans lequel lesdites substances de détachement sont distribuées sur la partie de surface de l'élément de formage (2, 3) destiné à entrer en contact avec le flan de pâte (30 et/ou la portion de flan de pâte (30) destinée à entrer en contact avec l'élément de formage (2, 3) .

11. Procédé de fabrication d'un disque de pizza à partir d'un flan de pâte (30) selon l'une des revendications 8 à 10, dans lequel le flan de pâte (30) est positionné centré sous le poinçon (1) avant d'exercer une pression sur le flan de pâte (30).

12. Procédé de fabrication d'un disque de pizza à partir d'un flan de pâte (30) selon l'une des revendications 8 à 11, comprenant en outre l'abaissement du poinçon (1) dans une position de travail dans laquelle les éléments de formage (2, 3) entrent en contact avec le flan de pâte (30).

13. Procédé de fabrication d'un disque de pizza à partir d'un flan de pâte (30) selon la revendication 12, dans lequel les éléments de formage (2, 3) sont en contact ou adjacents les uns aux autres lorsque le poinçon (1) est abaissé en position de travail.
